# EUROPEAN PATENT SPECIFICATION

(11) **EP 4 360 504 B1**
(45) Date of publication and mention of the grant of the patent: **24.09.2025**
(21) Application number: 22204258.2
(22) Date of filing: 27.10.2022
(51) Int. Cl.: A47C 7/74, B60N 2/56, H05B 3/34

(54) **METHOD FOR ATTACHING A HEATING WIRE TO A TEXTILE AND TEXTILE WITH A HEATING WIRE**
VERFAHREN ZUM ANBRINGEN EINES HEIZDRAHTES AN EINEM TEXTIL UND TEXTIL MIT EINEM HEIZDRAHT
PROCÉDÉ DE FIXATION D'UN FIL CHAUFFANT SUR UN TEXTILE ET TEXTILE AVEC UN FIL CHAUFFANT

(43) Date of publication of application: 01.05.2024
(73) Proprietor: Motherson Innovations Company Ltd., London EC2N 2AX (GB)
(72) Inventor: Pignard, Pierre, 68320 Jebsheim (FR); Wüstefeld, Thomas, 79235 Vogtsburg (DE); Bittner, Ralf-Christian, 79336 Herbolzheim (DE)
(74) Representative: Westphal, Mussgnug & Partner Patentanwälte mbB

(56) References cited:
- CN-A- 114 318 705
- DE-A1- 102005 024 432
- DE-T5- 112017 005 692
- JP-A- 2011 000 945

## Description

The present invention relates to a method for attaching a heating wire to a textile.

Further, the present invention relates to a textile of an interior part of a means of passenger transport, an interior part of a means of passenger transport and a means of passenger transport, in particular a vehicle.

The means of passenger transport is embodied in particular as a vehicle, but can also be a ship, an aircraft, a train or the like. In the following the disclosure is explained with reference to vehicles, however, the explanations shall also apply to other means of passenger transport, such as ships, aircraft, trains or the like.

The textile is meant to comprise any kind of flat and flexible material, both stretchable and non-stretchable, especially all kind of non woven material, knitted or woven fabrics, cloths, foils or the like.

In the pursuit of increasing the passenger comfort more and more parts of the means of passenger transport can be heated. To provide such a heated interior part, it is known to arrange a heating wire, sometimes also referred to as resistive element, resistor or resistance elements, inside the interior part near its surface. Especially for resilient interior parts as seats or armrests, the heating wire is arranged in the textile of those interior parts. The heat generated by the electric resistance is used to heat the interior part. The heating wire is distributed as evenly as possible inside the interior part to provide an even temperature distribution. For this purpose the heating wire often is arranged in a meander or serpentine fashion in the textile of the interior part. One particular embodiment of such an interior part is an armrest or a seat that has a higher degree of softness compared to other interior parts such as an instrument panel. A heated armrest or a heated seat together with its softness is offering a high comfort for the persons using the means of transport.

To attach the heating wire to the textile, it is known to use a sewing machine and attach the heating wire with a thread. KR 101592827 B1 discloses a method for manufacturing a thermal sheet using conductive heating wire comprising the steps of installing a conductive heating wire inlet pipe in a presser foot of a sewing machine, passing the conductive heating wire through the heating wire inlet pipe, disposing the conductive heating wire on the sheet material along a designed pattern and fixing the conductive heating wire to the sheet material while backstitching in a zigzag pattern by using an upper thread hung in a single needle of the sewing machine and a lower thread wound around a bobbin.

Due to the resilience of the specific interior part, especially a back-foamed textile of the interior part, it gets deformed when a passenger places its arm thereon or takes a seat. The deformation of the interior part is transmitted to the resistive element in form of a local elongation. Therefore, the resistive element may be damaged or even destroyed by the deformation of the interior part, especially in case of endurance loading test, in which a certain load is apply a high amount of time, for example 500 N during 12000 cycles. The higher the load, the higher the local deformation of the back-foamed textile. A damage is not only a brake of the wire, but also a local change of its properties, increasing the resistivity of the heating wire, creating local hotspots. The proper functioning of the heating element may not be given anymore.

JP 2011 000945 A discloses a method according to the preamble of claim 1 and a textile according to the preamble of claim 5. DE 10 2005 024432 A1 is mentioned as further prior art document.

It is one task of the present invention to propose a method for attaching a heating wire to a textile enabling to attach the heating wire to a textile in a cost effective way, especially such that the danger of being damaged or destroyed by the deformation of the textile is reduced and preferably avoided.

Further, an embodiment of the present invention has the object to provide a textile of an interior part of a means of passenger transport, an interior part of a means of passenger transport and a means of passenger transport, in particular a vehicle including such a heating system.

The task is solved by a method for attaching a heating wire to a textile comprising the features specified in claim 1, a textile of an interior part comprising the features specified in claim 5, an interior part comprising the features specified in claim 9, and a means of passenger transport comprising the features specified in claim 11.

Advantageous embodiments are the subject of the dependent claims.

According to the present invention, a method for attaching a heating wire to a textile comprises the steps of
- providing a textile,
- feeding the heating wire as upper thread or lower thread to a needle of a sewing machine, and
- attaching the heating wire as upper thread or lower thread to the textile by stitching with the sewing machine.

The core idea of the present invention is to use a heating wire as upper thread or lower thread of a sewing process instead of attaching the heating wire with a separate upper thread, especially like it is the case in standard embroidering process. Additional upper threads and additional specific parts for the sewing process, especially the sewing machine, as for example an inlet pipe in a presser foot of a sewing machine can be avoided which can reduce costs for production. The heating wire simply can be fed as the upper thread or lower thread, and thus especially being stitched in several manner provided by the sewing machine selected stitch type, that could not offer the solution of using an additional upper thread.

Attaching the heating wire as upper thread or lower thread to the textile allows for arrangement of the heating wire in free hand drawing patterns, especially in a meander or serpentine fashion. It is possible to arrange the heating wire equally on the textile regardless the shape of the textile. The arrangement of the heating wire in the meander or serpentine fashion enables a high area coverage that contributes to an even temperature distribution on the textile. Moreover, the high area coverage can be reached without a crossing of the heating wire.

According to an embodiment of the invention, a stretch stitch is used for stitching, for example a zigzag stitch, an elastic stitch, a blind hem stitch, a stretch zigzag stitch or a jersey stitch. The use of such kind of stitches enable stretching, bending or elongating the textile with reduced risk of damaging the heating wire.

A stretch stich is more flexible and can easily bend or extend in case the textile is deformed by a load applied on its surface. Due to the fact that a wire being arranged in a stretch stich has a longer length than a wire being arranged in a straight line, the wire can more easily follow the movements of the textile of the interior part and therefore adapt to the deformation of the interior part while using it. Especially, in the stitches parts of the heating wire are arranged angled to each other. Therefore, an elongation of the stitch when stretching the textile is possible by increasing the angle and local rotation of the parts of the heating wire against each other. The danger of being damaged or destroyed by the deformation in use of the respective textile therefore can significantly be reduced. Moreover, the stretchability of the textile can be enhanced. Furthermore, in such stitching, the wire pattern allows more durability during repeated local elongation or bending than it would do with a straight stitching pattern, for example during an endurance test.

Zigzag stitch, elastic stitch, blind hem stitch, stretch zigzag stitch or jersey stitch are stitches often provided on common sewing machines. Therefore, no special adaption of or specific equipment for the sewing machine is necessary.

According to the invention, the stitching amplitude of the stitch is in a range of 1 mm to 3 mm.

According to the invention, the stitching period of the stitch is in a range of 2 mm to 6 mm.

These kind of dimensions are suitable for providing a flexible and stretchable arrangement of the heating wire that can adapt to deformation of a textile or an interior part.

According to an embodiment of the invention, the two ends of the heating wire are connected to electrodes of an energy supply. No cross contacting electrodes are needed.

According to an embodiment of the invention, the heating wire is arranged on a thread spool or a bobbin. This arrangement allows processing of the heating wire on the sewing machine similar to processing of common yarn.

Preferably, the heating wire has a diameter in a range of 0,1 mm to 0,3 mm. This dimension of the heating wire is suitable for the heating wire to be processed on a sewing machine, depending of the choice of the needle, characterized by its eyes size and shape and by its surface treatment.

According to an embodiment of the invention, the heating wire is made of a conductive alloy, preferably of copper alloy. The respective heating element can be inexpensively manufactured and uniformly heated.

According to an embodiment of the invention, the heating wire comprises several filaments, for example three to five filaments, twisted together. The size of the cross section of the plurality of filaments may be chosen such that the area-related electric power is roughly the same as is the case for one single wire. The size of the cross section of one of the filaments is smaller compared to the size of the single wire. As a consequence the heating element may generate the same heat as a heating element comprising one single wire using less material. Further, by using a plurality of filaments the flexibility of the resistive element is increased compared to a heating element comprising one single wire only. The use of a multifilament thread can help to adjust exactly the needed resistance of the wire, playing with the art of alloy and the cross section of the single filament.

According to an embodiment, the heating wire, both in form of a single wire or in form of filaments, consists of conductive material. According to an alternative embodiment, the heating wire comprises a carrier thread and a conductive thread especially being twisted with each other, the carrier thread being non-conductive. Depending on the application and on the required cross section of the conductive thread, the heating wire can be made of conductive material either in part or in whole.

Another implementation of the invention is directed to a textile of an interior part of a means of passenger transport, in particular a vehicle, the textile comprising a heating wire being attached to the textile in form of stitches provided by a sewing machine. The advantages and technical effects described with reference to the method and device for attaching a heating wire to a textile equally apply to the textile of an interior part of a means of passenger transport, in particular a vehicle. In short it is possible to produce the heating textile in a cost effective way, especially such that the danger of a damage or destruction of the heating wire by the deformation of the respective textile is reduced.

Another implementation of the invention is directed to an interior part of a means of passenger transport, in particular a vehicle, comprising a textile with a heating wire according to one of the embodiments described above. The advantages and technical effects described with reference to the textile equally apply to the interior part. In short it is possible to produce the interior part in a cost effective way, especially such that the danger of a damage or destruction of the heating wire by the deformation of the respective interior part is reduced.

According to an embodiment of the invention, the interior part might be an armrest or a seat.

Another aspect of the invention is directed to a means of passenger transport comprising an interior part according to one of the implementations described above for interior parts of the means for passenger transport. The advantages and technical effects described with reference to the interior part equally apply to the means of passenger transport. In summary it is possible to produce the means for passenger transport in a cost effective way, especially such that the danger of a damage or destruction of the heating wire by the deformation of the respective interior part is reduced.

The present invention is described in detail with reference to the drawings attached wherein
- Figure 1a: is a principle illustration of a textile with a heating wire according to an embodiment of the present invention,
- Figure 1b: is an enlarged view of a part of figure **1****,**
- Figure 2a: is the view of figure 1b illustrating the textile in a non-stretched condition,
- Figure 2b: is a principle illustration of a sectional view of a heating wire according to a first embodiment of the present invention,
- Figure 2c: is a principle illustration of a sectional view of a heating wire according to a second embodiment of the present invention,
- Figure 2d: is a principle illustration of a sectional view of a heating wire according to a third embodiment of the present invention,
- Figure 2e: is a principle illustration of a sectional view of a heating wire according to a third embodiment of the present invention,
- Figure 2f: is a principle illustration of the textile according to figure 2a in a stretched condition,
- Figure 3: is a principle illustration of an embodiment of a device for attaching a heating wire to a textile,
- Figure 4a: is a principle illustration of the method of attaching a heating wire to a textile with the needle of a device for attaching a heating wire to a textile according to figure 3 in a first position,
- Figure 4b: is a principle illustration of the method of attaching a heating wire to a textile with the needle of a device for attaching a heating wire to a textile according to figure 3 in a second position,
- Figure 4c: is a principle illustration of the method of attaching a heating wire to a textile with the needle of a device for attaching a heating wire to a textile according to figure 3 in a third position,
- Figure 4d: is a principle illustration of the method of attaching a heating wire to a textile with the needle of a device for attaching a heating wire to a textile according to figure 3 in a fourth position,
- Figure 4e: is a principle illustration of the method of attaching a heating wire to a textile with the needle of a device for attaching a heating wire to a textile according to figure 3 in a fifth position,
- Figure 5a: is a principle illustration of a first embodiment of a stitch for attaching a heating wire to a textile,
- Figure 5b: is a principle illustration of a second embodiment of a stretch stitch for attaching a heating wire to a textile,
- Figure 5c: is a principle illustration of a third embodiment of a stretch stitch for attaching a heating wire to a textile,
- Figure 5d: is a principle illustration of a fourth embodiment of a stretch stitch for attaching a heating wire to a textile,
- Figure 5e: is a principle illustration of a fifth embodiment of a stretch stitch for attaching a heating wire to a textile, and
- Figure 6: is a principle illustration of a textile with a heating wire according to a further embodiment of the present invention.

The figures show different views of different components and embodiments of the present invention. Identical or similar parts are labelled with identical reference numbers in all figures. For clarity reasons not all reference numbers are included in all figures.

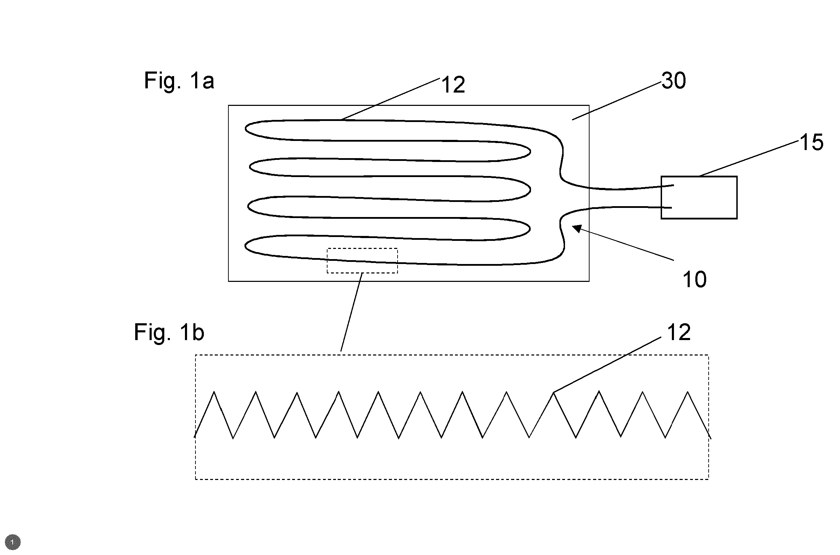

In Figures 1a and 1b a heating element 10 according to a first embodiment of the invention is shown by means of a principle sketch. The heating element 10 comprises a resistive element being formed as a heating wire 12. On its two ends the heating wire 12 may be connected to an energy supply 15. The energy supply might comprise at least one energy storage for storing electrical energy, which might be produced by the equipment of the vehicle. When activated the heating wire 12 is heated up due to its electric resistance. The generated heat is then transferred to the environment of the heating element 10, for example to a textile 30 of an interior part.

The heating wire 12 can have a diameter of 0,1 mm to 0,3 mm.

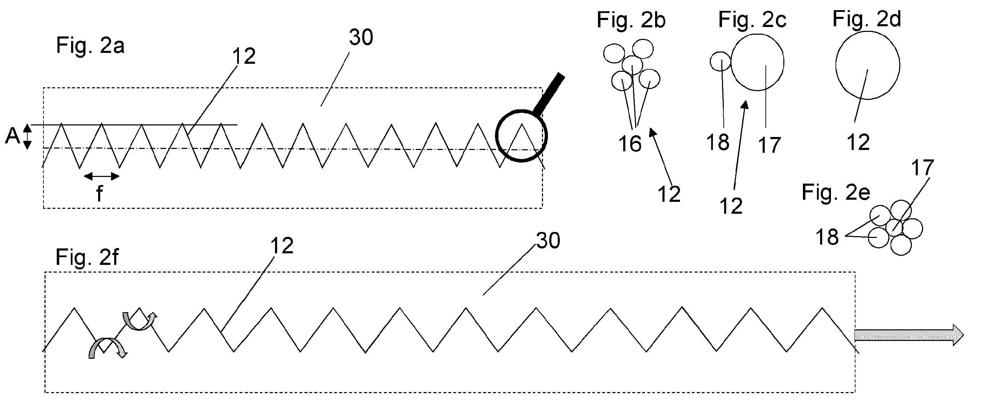

Preferably, the heating wire 12 is made of a conductive alloy, preferably of copper alloy. As shown in figure 2d, the heating wire 12 may be configured to be a single wire. According to an embodiment as shown in figure 2b, the heating wire 12 comprises several filaments 16, for example three to five filaments 16.

According to an embodiment, the heating wire 12, both in form of a single wire or in form of filaments, consists of conductive material. According to an alternative embodiment shown in figure 2c, the heating wire 12 comprises a carrier thread 17 and a conductive thread 18 especially being twisted with each other, the carrier thread 17 being non-conductive. According to a further alternative embodiment shown in figure 2e, the heating wire 12 comprises a carrier thread 17 and several conductive threads 18 surrounding the carrier thread 17, the carrier thread 17 being non-conductive. Depending on the application and on the required cross section of the conductive thread, the heating wire 12 can be made of conductive material either in part or in whole.

The heating wire 12 can be arranged in a meander or serpentine fashion to enable providing heat evenly over a large area of the textile 30 (see figure 1a).

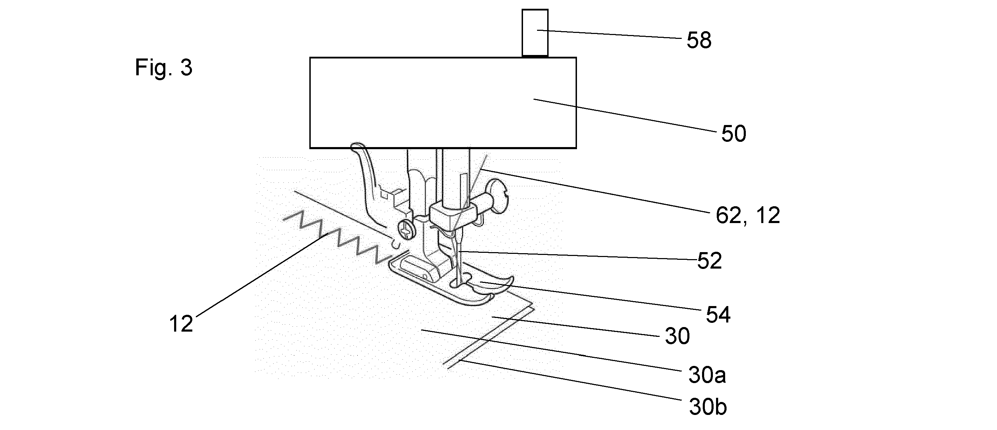

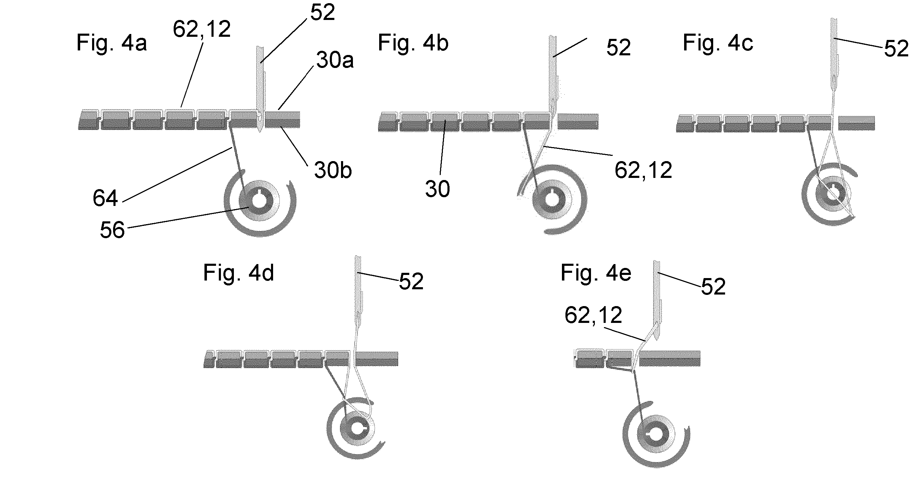

As illustrated in figure 3 and figures 4a to 4e, the heating wire 12 is attached to the textile 30 by being fed to a needle 52 in a sewing process, especially to a needle 52 of a sewing machine 50 as upper thread 62 or lower thread 64 and being attached as upper thread 62 or lower thread 64 to the textile 30 by stitching with the sewing machine 50. Figure 3 illustrated a device for attaching the heating wire 12 to a textile 30, the device being embodied as a sewing machine 50 comprising a needle 52. The textile 30 is provided and fixed beneath a pressure foot 54 of the sewing machine 50. The heating wire 12 can be arranged on a thread spool 58 or on a bobbin 56 and can be processed the same way as common yarn.

As known from common sewing machines, a lower thread 64 is arranged on a bobbin 56. The upper thread 62 is arranged through a hole of the needle 52. Figures 4a to 4e illustrate the forming of a stich by the upper thread 62 and the lower thread 64, either the upper thread 62 or the lower thread 64 being the heating wire 12. The upper thread 62 is visible on a front side 30a of the textile 30, the lower thread 64 is visible on a back side 30b of the textile. The thread which is not the heating wire 12 for example can be a common yarn or a yarn having desired characteristics with respect to thickness, stretchability, inflammableness, or similar. In case the needle 52 is piercing the textile 30 from the front side 30a in such a way that the hole of the needle is visible from the back side 30b of the textile 30, by rotation of the bobbin 56 the lower thread 64 can wind around the upper thread 62 to form a stitch.

Therefore, when stitching with the sewing machine 50 and using the heating wire 12 as upper thread or lower thread, the heating wire 12 is arranged in stiches on the textile 30.

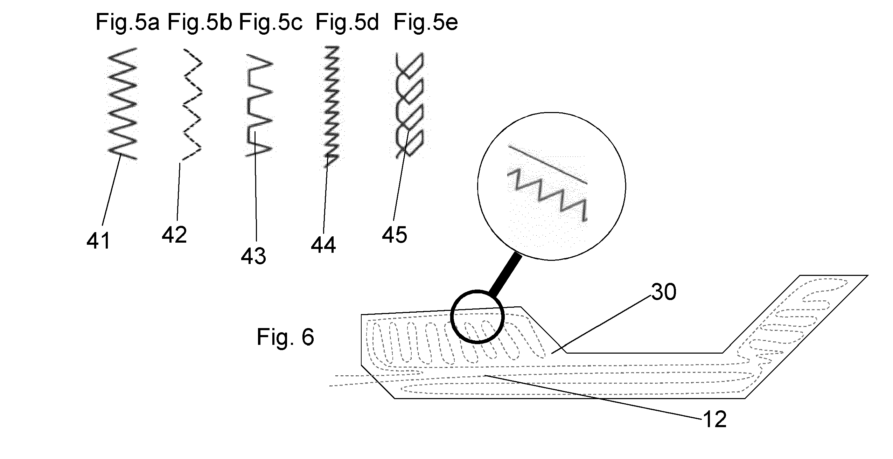

By attaching the heating wire 12 with the sewing machine 50 and using the heating wire 12 as upper thread or lower thread it is possible to arrange the heating wire 12 on the textile 30 regardless the shape of the textile 30 as illustrated in figure 6, especially in free hand drawing patterns.

The heating wire 12 may be arranged in form of stretch stitches, for example a zigzag stitch 41 (see figure 5a), an elastic stitch 42 (see figure 5b), a blind hem stitch 43 (see figure 5c), a stretch zigzag stitch 44 (see figure 5d) or a jersey stitch 45 (see figure 5e). As shown in figure 1b, in an embodiment this leads to an arrangement in which the meander or serpentine arrangement of the heating wire 12 has an additional structure realized by the structure of the stitches. Stretch stitches enables stretching or elongating the textile 30 without the risk of damaging the heating wire 12 as illustrated in figures 2a and 2b. Figure 2a illustrates the textile 30 in a non-stretched condition. Figure 2f illustrates the textile 30 in a stretched condition. Due to the fact, that in the stitches parts of the heating wire 12 are arranged angled to each other, an elongation of the stitch when stretching the textile 30 is possible by increasing the angle and local rotation of the parts of the heating wire 12 against each other.

The stitching amplitude A of the stitches ranges between 1 mm and 3 mm. The stitching period f of the stiches ranges between 2 mm and 6 mm.

In an embodiment, the textile 30 is used for an interior part of a means of passenger transport, especially as a cover, the interior part for example being an armrest or a seat. The means of passenger transport is embodied in particular as a vehicle, but can also be a ship, an aircraft, a train or the like.

### Reference list

- 10: heating element
- 12: heating wire
- 15: energy supply
- 16: filament
- 17: carrier thread
- 18: conductive wire
- 30: textile
- 30a: front side
- 30b: back side
- 41: zigzag stitch
- 42: elastic stitch
- 43: blind hem stitch
- 44: stretch zigzag stitch
- 45: jersey stitch
- 50: sewing machine
- 52: needle
- 54: pressure foot
- 56: bobbin
- 58: thread spool
- 62: upper thread
- 64: lower thread
- A: amplitude
- f: period

## Claims

1. Method for attaching a heating wire (12) to a textile (30), comprising the steps of
- providing a textile (30),
- feeding the heating wire (12) as upper thread (62) or lower thread (64) to a needle (52) of a sewing machine (50),
and
- attaching the heating wire (12) as upper thread (62) or lower thread (64) to the textile (30) by stitching with the sewing machine (50), **characterized in that**
- the stitching amplitude (A) of the stitch is in a range of 1 mm to 3 mm and
- the stitching period (f) of the stitch is in a range of 2 mm to 6 mm.

2. Method according to claim 1,
**characterized in that** a stretch stitch is used for stitching, for example a zigzag stitch (41), an elastic stitch (42), a blind hem stitch (43), a stretch zigzag stitch (44) or a jersey stitch (45).

3. Method according to one of the preceding claims,
**characterized in that** the two ends of the heating wire (12) are connected to electrodes of an energy supply (15).

4. Method for attaching a heating wire (12) to a textile (30) according to one of the preceding claims
**characterized in that** the heating wire (12) is arranged on a thread spool (58) or on a bobbin (56).

5. Textile (30) of an interior part of a means of passenger transport, in particular a vehicle, the textile (30) comprising a heating wire (12) being attached to the textile (30) in form of stitches as upper thread (62) or lower thread (64) provided by a sewing machine (50), **characterized in that** the stitching amplitude (A) of the stitch is in a range of 1 mm to 3 mm and the stitching period (f) of the stitch is in a range of 2 mm to 6 mm.

6. Textile according to claim 5, **characterized in that** the heating wire (12) has a diameter in a range of 0,1 mm to 0,3 mm.

7. Textile according to one of claims 5 or 6, **characterized in that** the heating wire (12) is made of a conductive alloy, preferably of copper alloy.

8. Textile according to one of claims 5 to 7, **characterized in that** the heating wire (12) comprises several filaments (16), for example three to five filaments (16), twisted together.

9. Interior part of a means of passenger transport, in particular a vehicle, the interior part comprising a textile (30) according to one of the claims 5 to 8.

10. Interior part according to claim 9, the interior part being an armrest or a seat.

11. Means of passenger transport, in particular a vehicle, comprising an interior part according to one of the claims 9 or 10.

## Patentansprüche

1. Verfahren zum Anbringen eines Heizdrahtes (12) an einem Textil (30), aufweisend die Schritte
- Bereitstellen eines Textils (30),
- Zuführen des Heizdrahtes (12) als Oberfaden (62) oder Unterfaden (64) zu einer Nadel (52) einer Nähmaschine (50), und
- Anbringen des Heizdrahts (12) als Oberfaden (62) oder Unterfaden (64) an dem Textil (30) durch Nähen mit der Nähmaschine (50), **dadurch gekennzeichnet, dass**
- die Stichamplitude (A) des Stichs in einem Bereich von 1 mm bis 3 mm liegt und
- die Stichperiode (f) des Stichs in einem Bereich von 2 mm bis 6 mm liegt.

2. Verfahren nach Anspruch 1,
**dadurch gekennzeichnet, dass** zum Nähen ein Stretchstich verwendet wird, zum Beispiel ein Zickzackstich (41), ein elastischer Stich (42), ein Blindsaumstich (43), ein Stretch-Zickzackstich (44) oder ein Jersey-Stich (45).

3. Verfahren nach einem der vorangehenden Ansprüche,
**dadurch gekennzeichnet, dass** die beiden Enden des Heizdrahtes (12) mit Elektroden einer Energieversorgung (15) verbunden sind.

4. Verfahren zum Anbringen eines Heizdrahtes (12) an einem Textil (30) nach einem der vorangehenden Ansprüche, **dadurch gekennzeichnet, dass** der Heizdraht (12) auf einer Garnrolle (58) oder auf einer Spule (56) angeordnet ist.

5. Textil (30) eines Innenausstattungsteils eines Personentransportmittels, insbesondere eines Fahrzeugs, wobei das Textil (30) einen Heizdraht (12) aufweist, der in Form von Stichen als Oberfaden (62) oder Unterfaden (64) durch eine Nähmaschine (50) an dem Textil (30) angebracht ist, **dadurch gekennzeichnet, dass** die Stichamplitude (A) des Stichs in einem Bereich von 1 mm bis 3 mm liegt und die Stichperiode (f) des Stichs in einem Bereich von 2 mm bis 6 mm liegt, **dadurch gekennzeichnet, dass** die Stichamplitude (A) des Stichs in einem Bereich von 1 mm bis 3 mm liegt und die Stichperiode (f) des Stichs in einem Bereich von 2 mm bis 6 mm liegt.

6. Textil gemäß Anspruch 5,
**dadurch gekennzeichnet, dass** der Heizdraht (12) einen Durchmesser im Bereich von 0,1 mm bis 0,3 mm aufweist.

7. Textil gemäß einem der Ansprüche 5 oder 6,
**dadurch gekennzeichnet, dass** der Heizdraht (12) aus einer leitfähigen Legierung, vorzugsweise aus einer Kupferlegierung, besteht.

8. Textil gemäß einem der Ansprüche 5 bis 7,
**dadurch gekennzeichnet, dass** der Heizdraht (12) mehrere Filamente (16), zum Beispiel drei bis fünf Filamente (16), , die miteinander verdrillt sind, aufweist.

9. Innenausstattungsteil eines Personentransportmittels, insbesondere eines Fahrzeugs, wobei der Innenausstattungsteil ein Textil (30) gemäß einem der Ansprüche 5 bis 8 aufweist.

10. Innenausstattungsteil gemäß Anspruch 9, wobei der Innenausstattungsteil eine Armlehne oder ein Sitz ist.

11. Personentransportmittel, insbesondere ein Fahrzeug, das einen Innenausstattungsteil gemäß einem der Ansprüche 9 oder 10 aufweist.

## Revendications

1. Procédé de fixation d'un fil (12) chauffant à un textile (30), comprenant les stades de :
- se procurer un textile (30),
- charger le fil (12) chauffant comme fil (62) supérieur ou comme fil (64) inférieur sur une aiguille (52) d'une machine (50) à coudre, et
- fixer le fil (12) chauffant comme fil (62) supérieur ou comme fil (64) inférieur au textile (30) en piquant par la machine (50) à coudre, **caractérisé en ce que** :
- l'amplitude (A) de piqûre du point est dans la plage de 1 mm à 3 mm et
- la période (f) de piqûre du point est dans la plage de 2 mm à 6 mm.

2. Procédé suivant la revendication 1,
**caractérisé en ce qu'**on utilise un point de tension pour la piqûre, par exemple, un point (41) en zigzag, un point (42) élastique, un point (43) de passepoil invisible, un point (44) en zigzag de tension ou un point (45) de jersey.

3. Procédé suivant l'une des revendications précédentes,
**caractérisé en ce que** les deux bouts du fil (12) de chauffage sont connectés à des électrodes d'une alimentation (15) en électricité.

4. Procédé de fixation d'un fil (12) chauffant à un textile (30) suivant l'une des revendications précédentes,
**caractérisé en ce que** l'on met le fil (12) chauffant sur une canette (58) de fil ou sur une bobine (56).

5. Textile (30) d'une partie intérieure d'un moyen de transport de passager, en particulier d'un véhicule, le textile (30) comprenant un fil (12) chauffant, fixé au textile (30) sous la forme de point comme fil (62) supérieur ou fil (64) inférieur, donné par une machine (50) à coudre, **caractérisé en ce que** l'amplitude (A) de piqûre du point est dans la plage de 1 mm à 3 mm et la période (f) de piqûre du point est dans la plage de 2 mm à 6 mm.

6. Textile suivant la revendication 5,
**caractérisé en ce que** fil (12) chauffant a un diamètre dans la plage de 0,1 mm à 0,3 mm.

7. Textile suivant l'une des revendications 5 ou 6,
**caractérisé en ce que** le fil (12) chauffant est en un alliage conducteur, de préférence, en un alliage de cuivre.

8. Textile suivant l'une des revendications 5 à 7,
**caractérisé en ce que** le fil (12) chauffant comprend plusieurs filaments (16), par exemple de trois à cinq filaments (16), retordus ensemble.

9. Partie intérieure d'un moyen de transport de passager, en particulier d'un véhicule, la partie intérieure comprenant un textile (30) suivant l'une des revendications 5 à 8.

10. Partie intérieure suivant la revendication 9,
la partie intérieure étant un accotoir ou un siège.

11. Moyen de transport de passager, en particulier un véhicule, comprenant une partie intérieure suivant l'une des revendications 9 ou 10.
